# EUROPÄISCHE PATENTSCHRIFT

(11) **EP 0 704 372 B1**
(45) Veröffentlichungstag und Bekanntmachung des Hinweises auf die Patenterteilung: **05.08.1998**
(21) Anmeldenummer: 95112486.6
(22) Anmeldetag: 09.08.1995
(51) Int. Cl.: B64D 11/02

(54) **Vakuumtoilettensystem in einem Flugzeug**
Vaccum toilet in an aircraft
Toilette sous vide dans un avion

(30) Priorität: 27.09.1994 DE 4434437
(43) Veröffentlichungstag der Anmeldung: 03.04.1996
(73) Patentinhaber: Daimler-Benz Aerospace Airbus Gesellschaft mit beschränkter Haftung, 21129 Hamburg (DE)
(72) Erfinder: Hiesener, Stefan, Dr. Ing., D-21614 Buxtehude (DE)
(74) Vertreter: Hansmann, Dierk, Dipl.-Ing.

(56) Entgegenhaltungen:
- DE-A- 4 108 549
- FR-A- 2 434 241
- US-A- 4 332 041

## Beschreibung

Die Erfindung betrifft ein Vakuumtoilettensystem in einem Flugzeug, bei dem mittels mindestens einer Luftstrahlpumpe Abfallstoffe von Abfalleinleitstellen, wie beispielsweise Toilettenbecken, über mindestens eine Sammelleitung zu wenigstens einem Abfallsammeltank gefördert werden und die Luftstrahlpumpe eine Düse, einen Trichter und einen Saugstutzen aufweist.

Aus der DE 41 08 549 C1 ist eine Anordnung bekannt, die mittels Unterdruck den Betrieb eines Vakuumtoilettensystems ermöglicht, wobei der Unterdruck zum Fördern von Abfallstoffen in einen Abfallsammeltank dient. Diese Anordnung weist eine Wasserstrahlpumpe mit einer eigenen Wasserpumpe auf, die über eine Saugleitung mit einem innerhalb des Abfallsammeltanks angeordneten Filter und über eine Druckleitung mit der Düse des Ejektors der Wasserstrahlpumpe verbunden ist. Durch Einschalten der Wasserpumpe wird gefiltertes Schmutzwasser vom Abfallsammeltank zum Ejektor gefördert und fließt von dort wieder zurück zum Tank. Beim Durchströmen des Ejektors reißt der Wasserstrahl Luftpartikel mit, so daß im Saugstutzen des Ejektors der erwünschte Unterdruck auftritt.
Bei der Nutzung von Schmutzwasser zum Betreiben des Ejektors ergibt sich insbesondere der Nachteil, daß ein Filter innerhalb des Abfallsammeltanks notwendig ist, der das Schmutzwasser vom groben Schmutz befreit, um die Funktionsfähigkeit der Pumpe und des Ejektors zu gewährleisten. Ein solches Filtern bedeutet einen regelmäßigen, relativ hohen Wartungs- und Reinigungsaufwand des Systems, insbesondere des Filters innerhalb des Abfallsammeltanks und der zum Fördern des Schmutzwassers notwendigen Wasserpumpe. Auch kann während eines Fluges durch grobe Verschmutzungen die Funktion von Filter und Pumpe beeinträchtigt werden, die während der Betriebszeit nicht wieder gereinigt werden können. Daher besteht die Gefahr, daß das gesamte Vakuumtoilettensystem während eines Fluges ausfallen kann.
Die FR-A-2 434 241 zeigt ein Abwasser-Kanalisationssystem, bei der das Abwasser mittels eines Vakuums gefördert wird. Insbesondere wird dieses Vakuum-Abwasser-Kanalisationssystem für das Betreiben von nur wenigen Toiletten, beispielsweise für Eisenbahnwaggons, vorgeschlagen. Dabei weist das System nur wenige Abwasser erzeugende Einheiten auf und die Betriebseinrichtungen dieses Systems sind so ausgelegt, daß für eine relativ kurze Abwasserleitung für nur diejenige Zeit ein Vakuum erzeugt wird, die zum Fördern einer einzelnen Abwasserabgabe erforderlich ist. Beim Betrieb der Anlage müssen sowohl die Abwasserleitung sowie die Sammelkammer evakuiert werden. Während des Förderns des Abwassers arbeitet die vakuumerzeugende Einrichtung nicht, damit keine Verunreinigungen und Feuchtigkeit in diese eindringen können.
Eine solche Einrichtung ist für die Anwendung im Flugzeug nicht geeignet, da neben der Abwasserleitung auch die Sammelkammer mit Unterdruck beaufschlagt wird und während des Förderns des Abwassers keine Vakuumerzeugung erfolgt. Somit können keine kurzen Anlaufzeiten bzw. ein Betreiben einer größeren Anzahl von Toiletten erreicht werden.

Demgemäß liegt der Erfindung die Aufgabe zugrunde, eine gattungsgemäße Anordnung derart auszubilden, daß die Funktionsfähigkeit des Vakuumtoilettensystems in einem Flugzeug und insbesondere für eine größere Anzahl von Toiletten wie für Großraumflugzeuge zu jeder Zeit und mit geringen Anlaufzeiten und einem Minimum an Wartungs- und Reinigungsaufwand gewährleistet ist und den Anforderungen an eine leichte Bauweise gerecht wird.

Diese Aufgabe ist mit den im Patentanspruch 1 angegebenen Maßnahmen gelöst.

Insbesondere ist vorteilhaft, daß mit der erfindungsgemäßen Lösung bei Bedarf ein Unterdruck lediglich in der Sammelleitung vor der Luftstrahlpumpe erzeugt wird. Hierdurch ist das zu evakuierende Volumen erheblich geringer und es kann eine größere Anzahl von Toiletten betrieben werden. Das Tankvolumen ist nicht begrenzt. Darüber hinaus wird Zapfluft zum Betreiben der Luftstrahlpumpe genutzt, was eine überaus energiesparende Form des Betreibens des Vakuumtoilettensystems bedeutet, da Zapfluft direkt zur Verfügung steht und keine verlustbehaftete Umwandlung der pneumatischen Energie aus einer anderen Energieform erfolgt.

Die Rückschlagklappe zwischen Luftstrahlpumpe und Sammelleitung wird nur bei Bedarf betätigt, d. h. wenn Abfall aus den Einleitstellen über die Sammelleitung zum Abfallsammeltank gefördert werden soll.

Durch das Zusammenwirken des Drossel- und Absperrventils in der Luftzufuhrleitung mit dem in der Abluftleitung angeordneten Absperr- und Regelventil kann die notwendige Luftzuführ geregelt werden. So ist bei Erreichen der Reiseflughöhe die Zapfluftzufuhr von den Triebwerken zu beenden bzw. zu reduzieren. In Reiseflughöhe ist die Druckdifferenz zwischen Flugzeugaußenluft und der Luft innerhalb des Flugzeugrumpfes ausreichend groß, um mit Hilfe der Flugzeugaußenluft über die Abluftleitung und dem dort angeordneten Ventil den zur Abfallförderung notwendigen Unterdruck bereitzustellen. Durch die Anordnung des Drossel- und Absperrventils in der Luftzufuhrleitung kann weiterhin in vorteilhafter Weise erreicht werden, daß bei Vereisungsproblemen des Vakuumtoilettensystems ein regelbarer, heißer Zapfluftstrom zum Abfallsammeltank geführt wird. Wegen der hiermit ermöglichten Erwärmung des Abfallsammeltanks bzw. des Tankinhalts kann insbesondere in der kalten Flugzeugumgebung in Reiseflughöhe eines Passagierflugzeuges ein Einfrieren des Abfallsammeltanks verhindert werden. Vorteilhaft ist auch, daß Zapfluft als Druckluftunterstützung wahrend des Entleerungsvorganges des Abfallsammeltanks zugeführt werden kann und somit notwendige Wartungszeit minimiert wird.

Filter für eine Funktionsfähigkeit der Strahlpumpe innerhalb des Vakuumtoilettensystems sind nicht mehr notwendig, was den Wartungs- und Reinigungsaufwand minimiert.

Weiterbildungen und zweckmäßige Ausgestaltungen ergeben sich aus den Unteransprüchen 2 bis 9.

Die Maßnahme gemäß Anspruch 2 verhindert, daß Abwasser aus dem Abfallsammeltank in die Abluftleitung und damit unkontrolliert nach außen gelangen kann.

Mit den Maßnahmen nach Anspruch 3, 4 und 8 ergeben sich flexible Entleerungsmöglichkeiten, da entweder durch Schwerkraft, interner Druckluftunterstützung oder auch mit externer Druckluftunterstützung der Abfallsammeltank geleert werden kann.

Die Maßnahmen gemäß den Ansprüchen 6 oder 7 ermöglichen eine Einsparung von aufwendigen, überwiegend elektrisch betriebenen Heizungsinstallationen zum Schutz vor dem Vereisen gefährdeter Stellen der Vakuumtoilettenanlage und insbesondere des Abfallsammeltanks. So wird eine erhebliche Energie- und Gewichtseinsparung realisiert.

Für die notwendigen Maßnahmen zur Reinigung des Abfallsammeltanks wird mit der Ausgestaltung nach Anspruch 9 eine zusätzliche Spülleitung am Abfallsammeltank eingespart.

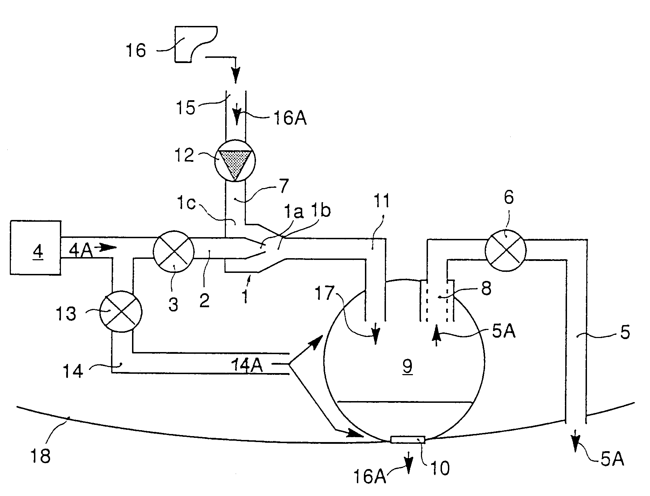

Die Erfindung wird nachstehend beschrieben und anhand der einzigen Figur näher erläutert.

Die Figur zeigt eine Ausgestaltung eines Vakuumtoilettensystems.

Die Figur zeigt in einer schematischen Darstellung ein Vakuumtoilettensystem in einem Flugzeug, wobei Abfallstoffe 16A von Abfalleinleitstellen 16, wie z. B. von Toilettenbecken, über eine Sammelleitung 15 zu einem Abfallsammeltank 9 gefördert werden. Eine Zapfluftversorgung 4 ist über eine mit einem Drossel- und Absperrventil 3 versehene Luftzufuhrleitung 2 mit der Düse 1a einer Luftstrahlpumpe 1 verbunden. Ferner ist der Trichter 1b der Luftstrahlpumpe 1 über ein Saugrohr 11 mit dem Abfallsammeltank 9 verbunden. Der Saugstutzen 1c der Luftstrahlpumpe 1 ist über eine Saugleitung 7 an eine Sammelleitung 15 angeschlossen, um den dort notwendigen Unterdruck zur Verfügung stellen zu können. In der Sammelleitung 15 werden die von den Toilettenbecken, Küchen oder Waschbecken eingeleiteten Abfallstoffe 16A in Richtung Abfallsammeltank 9 transportiert. Die Saugleitung 7 ist gegenüber der Sammelleitung 15 mit einer Rückschlagklappe 12 verschließbar. Der Abfallsammeltank 9 besitzt vorzugsweise im oberen Bereich den Anschluß an das Saugrohr 11 und einen Luftausgang über eine mit Wasserabscheider 8 und Regelventil 6 versehene Abluftleitung 5 zur Flugzeugumgebung. Dazu ist ein Durchbruch in der Rumpfhaut des Flugzeuges 18 vorgesehen.

Um gleichzeitig auch einen Schutz gegen Vereisen an den Bauteilen in den kalten Flugzeugzonen zu erreichen, insbesondere in der Nähe der Rumpfhaut 18, ist an die Zapfluftversorgung 4 zusätzlich über ein Regelventil 13 eine Heizluftleitung 14 angeschlossen, wobei die Heizluftleitung 14 mit Heizluftabgabeeinrichtungen in der Nähe von vereisungsgefährdeten Stellen, wie beispielsweise dem Abfallsammeltank 9 und dem Ablaßventil 10, versehen ist. Die Heizluftabgabeeinrichtungen können als Luftkanäle am Abfallsammeltank 9 und/oder am Ablaßventil 10 ausgebildet sein. Bedarfsabhängig wird über das Regelventil 13 heiße Zapfluft 4A der Zapfluftversorgung 4 entnommen und über die Heizluftleitung 14 als Heizluft 14A an die vereisungsgefährdeten Stellen geleitet. Auch wird in dieser Ausgestaltung der Zapfluftstrom 4A über die Luftstrahlpumpe 1 nicht sofort nach außen geleitet, sondern er gelangt in das Innere des Tanks 9 und dient dort zusätzlich zur Erwärmung des Tanks 9 und des Tankinhaltes.

Damit können zusätzliche und aufwendige, überwiegend elektrisch betriebene Heizungsinstallationen entfallen und so Energie und Gewicht eingespart werden.

Am Abfallsammeltank 9 ist ein Ablaßventil 10 angeordnet, vorzugsweise in der Nähe des tiefsten Punktes des Abfallsammeltanks 9. Damit sind flexible Entleerungsmöglichkeiten gegeben, da entweder durch Schwerkraft oder auch durch Druckluftunterstützung der Abfallsammeltank 9 geleert werden kann.

Während eines Fluges bei noch nicht ausreichender Flughöhe bzw. am Boden, wenn die Triebwerke/Hilfstriebwerke eines Flugzeuges oder eine Bodenversorgungseinrichtung eine Zapfluftversorgung 4 ermöglichen und ein Betrieb des Vakuumtoilettensystems mittels Druckdifferenz zwischen Kabine und Flugzeugumgebung noch nicht möglich ist, wird die erfindungsgemäße Lösung wie nachfolgend beschrieben in Betrieb genommen. Solange die Druckdifferez zwischen Kabine und Flugzeugumgebung nicht ausreicht, wird Zapfluft 4A der Zapfluftversorgung 4, vorzugsweise einem Strahltriebwerk, entnommen. Sie durchströmt die Luftzufuhrleitung 2 und das offene Drossel- und Absperrventil 3 und gelangt zur Düse 1a der Luftstrahlpumpe 1. Beim Durchströmen der Luftstrahlpumpe 1 reißt der Zapfluftstrom 4A Luft- und Abfallpartikel aus der Saugleitung 7 mit, so daß am Saugstutzen 1c und an der daran angeordneten Saugleitung 7 der erwünschte Unterdruck auftritt. Die Rückschlagklappe 12 öffnet sich und Abfallstoffe 16A aus Abfalleinleitstellen 16, wie beispielsweise aus Toilettenbecken, Waschbecken oder Küchen, werden zusammen mit der Zapfluft 4A durch den Trichter 1b der Luftstrahlpumpe 1 und dem Saugrohr 11 als Ejektorstrahl 17 in den Abfallsammeltank 9 geleitet. Die in den Abfallsammeltank 9 strömende Luft wird als Abluft 5A über den Wasserabscheider 8 und durch die Abluftleitung 5 bei offenem Regelventil 6 nach außen in die Flugzeugumgebung geleitet.
Nach Beendigung des Fördervorganges von Abfallstoffen 16A in den Abfallsammeltank 9 kann sich die Rückschlagklappe 12 wieder schließen.

Bei Erreichen des im Reiseflug bestehenden Druckgefälles wird das Absperrventil 3 geschlossen und der zum Fördern notwendige Unterdruck steht nunmehr aus der Flugzeugumgebung zur Verfügung. Mittels dem Regelventil 6 wird jetzt entsprechend dem Bedarf geregelt.

Die Heizluftversorgung in der Heizluftleitung 14 ist mit dem Regelventil 13 regelbar. Erfahrungsgemäß wird bei Erreichen der Reiseflughöhe der Bedarf an Heizluft zunehmen. Da im Reiseflug eine Nutzung der Zapfluft zur Unterdruckerzeugung nicht notwendig ist, kann die Gesamtzapfluftmenge, die nun als Heizluft 14A zur Verfügung steht, für den Betrieb des Vakuumtoilettensystems relativ gering gehalten werden.
Da in dieser Ausgestaltung bei Nutzung der Zapfluft zur Unterdruckerzeugung der Zapfluftstrom 4A über die Luftstrahlpumpe 1 nicht sofort nach außen geleitet wird, sondern erst in das Innere des Tanks 9 gelangt und dort zusätzlich zur Erwärmung des Tanks 9 und des Tankinhaltes dient, kann bei großen Vereisungsproblemen im Vakuumtoilettensystem alternativ zur oben dargestellten Wirkungsweise während des gesamten Fluges ein mit Regelventil 3 regelbarer Zapfluftstrom in das Innere des Tanks 9 geleitet werden.

Für ein am Boden stehendes Flugzeug kann das Entleeren des Abfallsammeltanks 9 über das Ablaßventil 10 durch Schwerkraftwirkung oder mit Druckunterstützung durch das Zapfluftsystem erfolgen. Hierzu werden das Ablaßventil 10 geöffnet und das Ventil 6 geschlossen. Bei offenem Ventil 3 drückt jetzt die Zapfluft 4A durch den Trichter 1b und dem Saugrohr 11 auf den Tankinhalt des Abfallsammeltanks 9 und unterstützt dessen Entleerung. Die Rückschlagklappe 12 ist dabei verschlossen.

Alternativ dazu kann auch ohne Zapfluftversorgung von den Triebwerken von einer externen Druckluftquelle bei geschlossenem Ventil 3 und geschlossener Rückschlagklappe über die Abluftleitung 5 und dem geöffnetem Ventil 6 der Abfallsammeltank 9 mit Druck beaufschlagt werden und so die Entleerung des Tanks 9 beschleunigen. Um ein Spülen des Tanks 9 zu ermöglichen, kann über die Abluftleitung 5 bei denselben Ventilpositionen eine Reinigungsflüssigkeit in den Tank 9 geleitet werden und so vorteilhaft der Tank gereinigt werden.

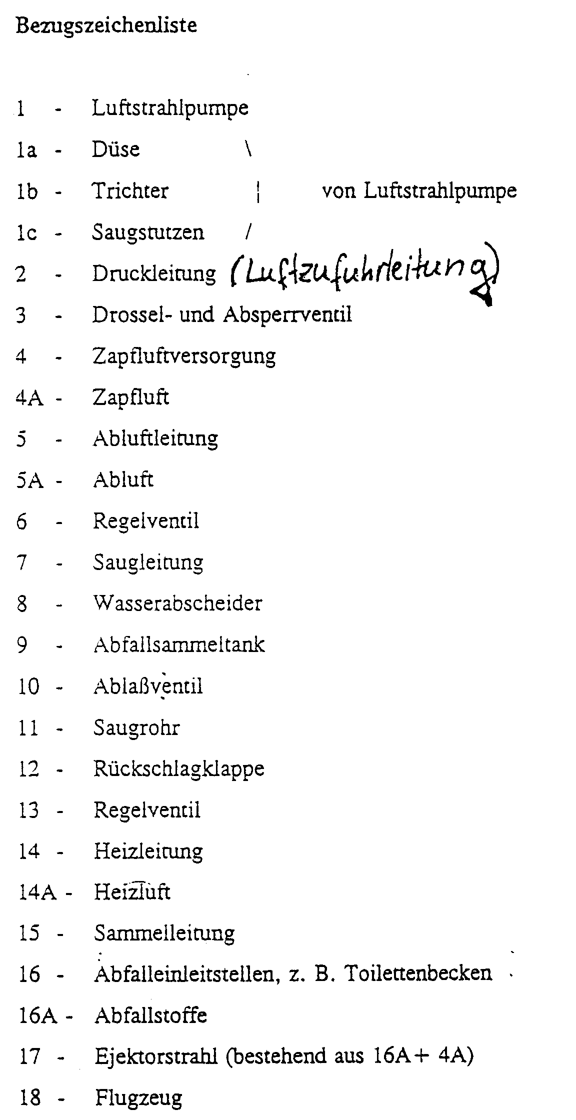

## Patentansprüche

1. Vakuumtoilettensystem in einem Flugzeug, bei dem mittels mindestens einer Luftstrahlpumpe (1) Abfallstoffe (16A) von Abfalleinleitstellen (16), wie beispielsweise Toilettenbecken, über mindestens eine Sammelleitung (15) zu wenigstens einem Abfallsammeltank (9) gefördert werden und die Luftstrahlpumpe (1) eine Düse (1a), einen Trichter (1b) und einen Saugstutzen (1c) aufweist,
**dadurch gekennzeichnet, daß**
eine Zapfluftversorgung (4) von einem Triebwerk bzw. Hilfstriebwerk über eine Luftzufuhrleitung (2) mit der Düse (1a) der Luftstrahlpumpe (1) verbunden ist, der Saugstutzen (1c) der Strahlpumpe an die Sammelleitung (15) angeschlossen ist, der Trichter (1b) der Strahlpumpe über ein Saugrohr (11) mit dem Abfallsammeltank (9) und der Abfallsammeltank (9) mit einer Abluftleitung (5) verbunden ist und daß in der Luftzufuhrleitung (2) ein Drossel- und Absperrventil (3), in der Sammelleitung (15) eine Rückschlagklappe (12) und in der Abluftleitung (5) ein Absperr- und Regelventil (6) angeordnet ist.

2. Vakuumtoilettensystem nach Anspruch 1,
**dadurch gekennzeichnet, daß**
die Abluftleitung (5) mit einem Wasserabscheider (8) versehen ist.

3. Vakuumtoilettensystem nach einem der Ansprüche 1 oder 2,
**dadurch gekennzeichnet, daß**
ein Ende der Abluftleitung (5) als ein Luftauslaß zur Flugzeugumgebung ausgebildet ist.

4. Vakuumtoilettensystem nach einem der Ansprüche 1 bis 3,
**dadurch gekennzeichnet, daß**
ein Ablaßventil (10) im Bereich des tiefsten Punktes des Abfallsammeltanks (9) angeordnet ist.

5. Vakuumtoilettensystem nach einem der Ansprüche 1 bis 4,
**dadurch gekennzeichnet, daß**
im oberen Bereich des Abfallsammeltanks (9) die Anschlüsse für das Saugrohr (11) und die Abluftleitung (5) vorgesehen sind.

6. Vakuumtoilettensystem nach einem der Ansprüche 1 bis 5,
**dadurch gekennzeichnet, daß**
an die Zapfluftversorgung (4) über ein Regelventil (13) eine Heizluftleitung (14) angeschlossen ist wobei die Heizluftleitung (14) mit Heizluftabgabeeinrichtungen in der Nähe von vereisungsgefährdeten Stellen des Abfallsammeltanks (9) versehen ist.

7. Vakuumtoilettensystem nach einem der Ansprüche 1 bis 6,
**dadurch gekennzeichnet, daß**
die Heizluftabgabeeinrichtungen als Luftkanäle am Abfallsammeltank (9) und/oder am Ablaßventil (10) ausgebildet sind.

8. Vakuumtoilettensystem nach einem der Ansprüche 1 bis 7,
**dadurch gekennzeichnet, daß**
an die Abluftleitung (5) ein Anschluß für eine externe Druckluftquelle vorgesehen ist, um eine Entleerung des Tanks (9) mit Druckluft zu unterstützen.

9. Vakuumtoilettensystem nach einem der Ansprüche 1 bis 8,
**dadurch gekennzeichnet, daß**
die externe Druckluftquelle mit einer Reinigungsflüssigkeitsquelle verbindbar ist.

## Claims

1. Vacuum toilet system in an aircraft, in which waste substances (16A) are conveyed by means of at least one air jet pump (1) from waste introduction points (16), such as toilet basins for example, to at least one waste-collecting tank (9) via at least one collecting line (15), and the air jet pump (1) has a nozzle (1a), a funnel (1b) and a suction pipe connection (1c),
**characterised in that**
a tap air supply (4) from an engine or auxiliary engine is connected via an air feed valve (2) to the nozzle (1a) of the air jet pump (1), the suction pipe connection (1c) of the jet pump is connected to the collecting line (15), the funnel (1b) of the jet pump is connected via a suction pipe (11) to the waste-collecting tank (9) and the said waste-collecting tank (9) is connected to a waste air line (5), and that a throttle and shut-off valve (3) is disposed in the air feed line (2), a non-return flap valve (12) is disposed in the collecting line (15), and a shut-off and regulating valve (6) is disposed in the waste air line (5).

2. Vacuum toilet system according to claim 1,
**characterised in that**
the waste air line (5) is provided with a water-separator (8).

3. Vacuum toilet system according to one of claims 1 or 2,
**characterised in that**
one end of the waste air line (5) is constructed as an air outlet to the environment surrounding the aircraft.

4. Vacuum toilet system according to one of claims 1 to 3,
**characterised in that**
a discharge valve (10) is disposed in the region of the lowest point on the waste-collecting tank (9).

5. Vacuum toilet system according to one of claims 1 to 4,
**characterised in that**
the connections for the suction pipe (11) and the waste air line (5) are provided in the upper region of the waste-collecting tank (9).

6. Vacuum toilet system according to one of claims 1 to 5,
**characterised in that**
a heating air line (14) is connected to the tap air supply (4) via a regulating valve (13), the said heating air line (14) being provided with heating air delivery arrangements in the vicinity of points on the waste-collecting tank (9) which are in danger of icing-up.

7. Vacuum toilet system according to one of claims 1 to 6,
**characterised in that**
the heating air delivery arrangements are constructed as air ducts on the waste-collecting tank (9) and/or on the discharge valve (10).

8. Vacuum toilet system according to one of claims 1 to 7,
**characterised in that**
a connection to the waste air line (5) is provided for an external compressed air source, in order to assist the emptying of the tank (9) with compressed air.

9. Vacuum toilet system according to one of claims 1 to 8,
**characterised in that**
the external compressed air source can be connected to a cleaning liquid source.

## Revendications

1. Toilettes sous vide dans un avion, dans le cas desquelles les déjections (16A) provenant des lieux de déversement de déjections (16), par exemple les cuvettes des toilettes, sont transportées par l'intermédiaire d'au moins une pompe à jet d'air (1) par au moins une conduite de collecte (15) vers au moins un réservoir de collecte de déjections (9), la pompe à jet d'air (1) comportant une tuyère (1a), un collecteur (1b) et une tubulure d'aspiration (1c), caractérisées en ce qu'une prise d'air (4) d'un groupe moteur ou d'un mécanisme d'entraînement auxiliaire est reliée à la tuyère (1a) de la pompe à jet d'air (1) par l'intermédiaire d'une conduite d'amenée d'air (2), en ce que la tubulure d'aspiration (1c) de la pompe à jet d'air est raccordée à la conduite de collecte (15), en ce que le collecteur (1b) de la pompe à jet d'air est relié par un tuyau d'aspiration (11) au réservoir de collecte de déjections (9) et le réservoir de collecte de déjections (9) est relié à une conduite d'évacuation de l'air (5) et en ce qu'il est prévu une soupape d'étranglement et d'arrêt (3) dans la conduite d'amenée d'air (2), un clapet (12) dans la conduite de collecte (15) et une soupape d'arrêt et de réglage (6) dans la conduite d'évacuation de l'air (5).

2. Toilettes sous vide suivant la revendication 1, caractérisées en ce que la conduite d'évacuation de l'air (5) est équipée d'un purgeur (8).

3. Toilettes sous vide suivant la revendication 1 ou 2, caractérisées en ce qu'une extrémité de la conduite d'évacuation de l'air (5) est conçue comme une sortie d'air vers l'extérieur de l'avion.

4. Toilettes sous vide suivant l'une quelconque des revendications 1 à 3, caractérisées en ce qu'une soupape de décharge (10) est disposée dans la zone du point le plus bas du réservoir de collecte de déjections (9).

5. Toilettes sous vide suivant l'une quelconque des revendications 1 à 4, caractérisées en ce que les raccords pour le tuyau d'aspiration (11) et la conduite d'évacuation de l'air (5) sont prévus dans la zone supérieure du réservoir de collecte de déjections (9).

6. Toilettes sous vide suivant l'une quelconque des revendications 1 à 5, caractérisées en ce qu'une conduite d'air chaud (14) est raccordée à la prise d'air (4) par une soupape de réglage (13), la conduite d'air chaud (14) étant pourvue de dispositifs de dégagement d'air chaud à proximité des points du réservoir de collecte de déjections risquant le givrage.

7. Toilettes sous vide suivant l'une quelconque des revendications 1 à 6, caractérisées en ce que les dispositifs de dégagement d'air chaud se présentent sous la forme d'évents dans le réservoir de collecte de déjection (9) et/ou dans la soupape de décharge (10).

8. Toilettes sous vide suivant l'une quelconque des revendications 1 à 7, caractérisées en ce qu'un raccord pour une source d'air comprimé extérieure est prévu sur la conduite d'évacuation de l'air (5) afin d'assister la vidange du réservoir (9) par air comprime.

9. Toilettes sous vide suivant l'une quelconque des revendications 1 à 8, caractérisées en ce que la source d'air comprimé extérieure peut être reliée à une source de liquide de nettoyage.
